# EUROPEAN PATENT SPECIFICATION

(11) **EP 3 941 182 B1**
(45) Date of publication and mention of the grant of the patent: **01.05.2024**
(21) Application number: 19798749.8
(22) Date of filing: 31.10.2019
(51) Int. Cl.: A01D 34/66, A01D 43/077

(54) **LAWN CARE VEHICLE COMPRISING A CLOG CLEANING ASSEMBLY**
RASENPFLEGEFAHRZEUG MIT EINER VERSTOPFUNGSREINIGUNGSANORDNUNG
VÉHICULE D'ENTRETIEN DE GAZON COMPRENANT UN ENSEMBLE DE NETTOYAGE D'OBSTRUCTION

(30) Priority: 04.07.2019 SE 1950846
(43) Date of publication of application: 26.01.2022
(73) Proprietor: HUSQVARNA AB, 561 82 Huskvarna (SE)
(72) Inventor: STENEBRAND, Louise, 55454 Jönköping (SE); HULTGREN, Andreas, 57193 Nässjö (SE); CLAESSON, Magnus, 55322 Jönköping (SE); FINLÖF, Martin, 55456 Jönköping (SE); JOHANSSON, Markus, 56146 Huskvarna (SE)
(74) Representative: Schröer, Gernot H.
(86) International application number: PCT/IB2019/059372
(87) International publication number: WO 2021/001682

(56) References cited:
- WO-A1-2017/208046
- US-A- 3 514 931

## Description

### TECHNICAL FIELD

Example embodiments generally relate to a lawn care vehicle and, more particularly, to a clog cleaning assembly for a lawn care vehicle.

### BACKGROUND

Lawn care tasks are commonly performed using various tools or machines that are configured for the performance of corresponding specific tasks. Certain tasks, like grass cutting, are typically performed by lawn care vehicles. Lawn care vehicles themselves may have many different configurations to support the needs and budgets of consumers. Walk-behind lawn mowers are typically compact, have comparatively small motors and are relatively inexpensive. Meanwhile, at the other end of the spectrum, riding lawn mowers, such as lawn tractors, can be quite large. Riding lawn mowers can sometimes also be configured with various functional accessories (e.g., trailers, tillers, or the like) in addition to grass cutting components. Riding lawn mowers provide the convenience of a riding vehicle as well as a typically larger cutting deck as compared to a walk-behind model. WO 2017/208046 A1 discloses a lawn care vehicle comprising a frame to which drive wheels are attached, a cutting deck operably coupled to the frame and comprising a cutting blade and a conveyor operably coupled to the cutting deck and capable to convey yard clippings from the cutting deck to a yard ways collection assebly. The conveyor comprises an auger.

### BRIEF SUMMARY OF SOME EXAMPLES

Some example embodiments provided herein relate to a clog cleaning assembly for a lawn care vehicle. The clog cleaning assembly may be configured to clean or dislodge a clog from a cutting blade or an auger of the lawn care vehicle in response to activation of the clog cleaning assembly by an operator of the lawn care vehicle. The operator may activate the clog cleaning assembly without leaving the position from which they are operating the lawn care vehicle. Furthermore, the lawn care vehicle does not need to be shut off, and neither the cutting deck, auger, nor any yard waste collection assembly of the lawn care vehicle needs to be removed or moved from an operational to a service position in order activate the clog cleaning assembly. Rather, the clog cleaning assembly may be activated by the operator without interrupting the operation of the mower to clean or dislodge any clogs in the cutting blade or auger of the lawn care vehicle.

In one example embodiment, a lawn care vehicle is provided. The lawn care vehicle includes a frame to which at least a first drive wheel and a second drive wheel of the lawn care vehicle are operably coupled, and a cutting deck operably coupled to the frame and including a cutting blade. The lawn care vehicle further includes a conveyor operably coupled to the cutting deck and configured to convey yard clippings from the cutting deck to a yard waste collection assembly. Furthermore, the conveyor may include an auger. The lawn care vehicle also includes a clog cleaning assembly operably coupled to an outside of a housing of a cutting deck, the clog cleaning assembly being configured to pivot from a neutral position through an opening in the housing of the cutting deck to an activated position to dislodge a clog disposed proximate or at the cutting blade or the auger.

In another example embodiment, a clog cleaning assembly of a lawn care vehicle is provided. The clog cleaning assembly includes a cleaning member operably coupled to a housing of a cutting deck of the lawn care vehicle, the cleaning member being configured to pivot from a neutral position through an opening in the housing of the cutting deck of the lawn care vehicle to an activated position to dislodge a clog disposed proximate or at a cutting blade or an auger of the lawn care vehicle. The clog cleaning assembly further includes an activation assembly configured to cause the cleaning member to pivot from the neutral position to the activated position in response to activation by an operator of the lawn care vehicle located at a position from which the lawn care vehicle is operated.

The invention is set out in the appended set of claims.

### BRIEF DESCRIPTION OF THE SEVERAL VIEWS OF THE DRAWING(S)

Having thus described some embodiments of the present invention in general terms, reference will now be made to the accompanying drawings, which are not necessarily drawn to scale, and wherein:
FIG. 1 illustrates a side view of a lawn care vehicle according to an example embodiment;
FIG. 2 illustrates a side view of a lawn care vehicle with a cutting deck in a service position according to an example embodiment;
FIG. 3 illustrates a cross sectional view of a lawn care vehicle according to an example embodiment;
FIG. 4 illustrates a perspective view of a conveyor according to an example embodiment;
FIG. 5 illustrates an isolated view of a first side of a conveyor and a cutting deck having a clog cleaning assembly in a neutral position according to an example embodiment;
FIG. 6 illustrates an isolated view of a second side of a conveyor and a cutting deck having a clog cleaning assembly in a neutral position according to an example embodiment;
FIG. 7 illustrates a top view of a cutting deck according to an example embodiment;
FIG. 8 illustrates a cross sectional view of a conveyor and a cutting deck having a clog cleaning assembly in a neutral position according to an example embodiment;
FIG. 9 illustrates an isolated view of a conveyor and a first side of a cutting deck having a clog cleaning assembly in an activated position according to an example embodiment;
FIG. 10 illustrates an isolated view of a conveyor and a second side of a cutting deck having a clog cleaning assembly in an activated position according to an example embodiment;
FIG. 11 illustrates a cross sectional view of a conveyor and a cutting deck having a clog cleaning assembly in an activated position according to an example embodiment; and
FIG. 12 illustrates a bottom view of a cutting deck having a clog cleaning assembly in an activated position according to an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability, or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, the phrase "operable coupling" and variants thereof should be understood to relate to direct or indirect connection that, in either case, enables functional interconnection of components that are operably coupled to each other.

Some example embodiments provided herein may improve the ability of an operator to clean or dislodge a clog from a cutting blade or auger of a lawn care vehicle, such as, for example, a riding lawn mower, without having to power down the lawn care vehicle, remove the auger or yard waste collection assembly, or move the cutting deck to a service position. In this regard, some example embodiments may provide a clog cleaning assembly that is configured to clean or dislodge a clog from the cutting deck or auger without disrupting a mowing operation of the lawn care vehicle. Furthermore, an operator may easily activate the clog cleaning assembly without moving from the position in which the operator is operating the lawn care vehicle.

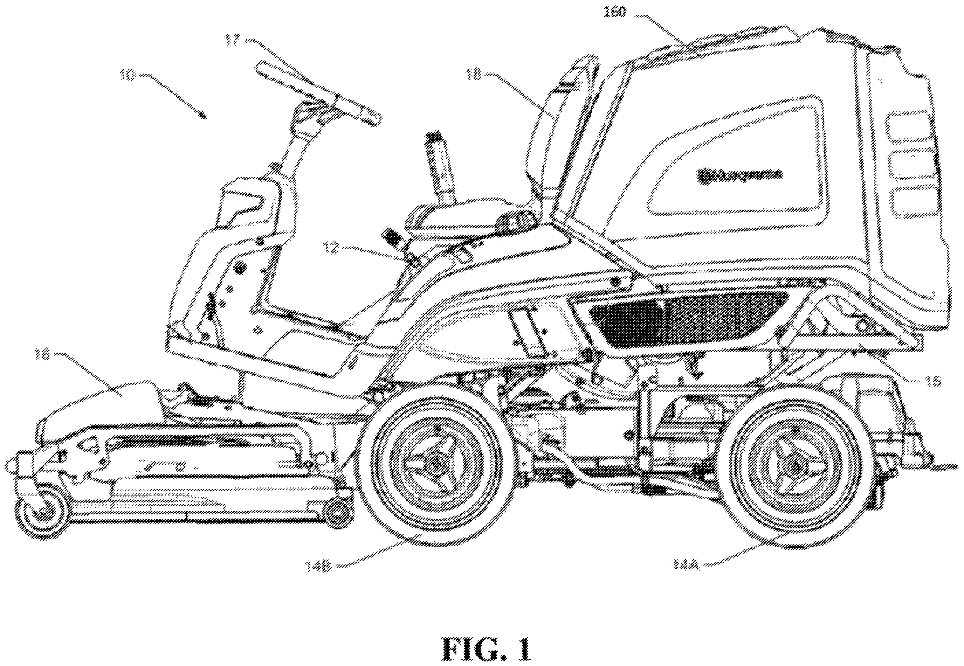

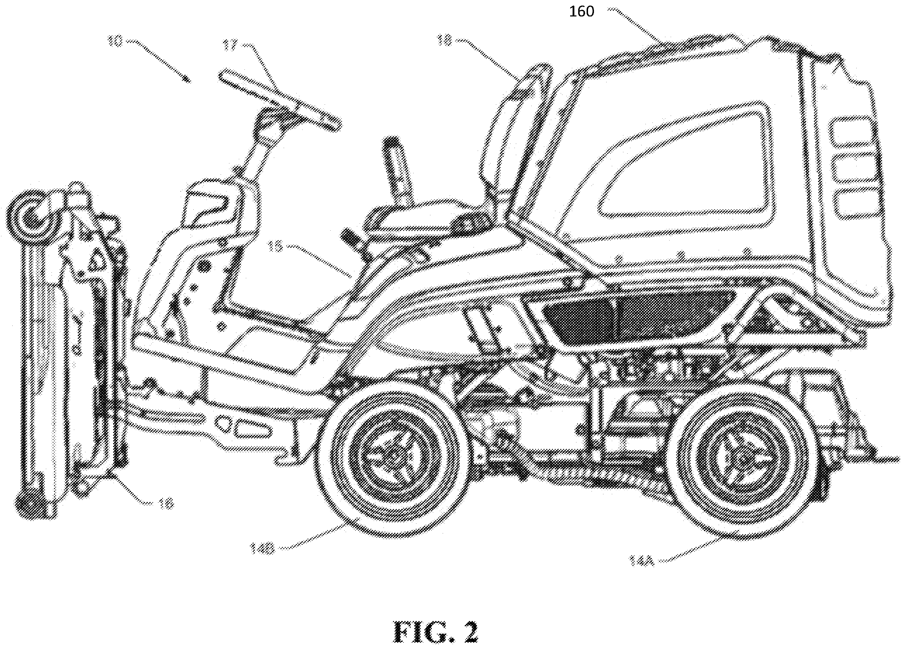

FIGS. 1 and 2 illustrate a lawn care vehicle 10 according to an example embodiment. As shown in FIG. 1, the lawn care vehicle 10 may include a seat 18 that may be disposed proximate a center of the lawn care vehicle 10. However, in other example embodiments, the seat 18 may be disposed proximate or at a rear or front portion of the lawn care vehicle 10. The lawn care vehicle 10 may also include a steering assembly 17 (e.g., a steering wheel, a set of steering levers, handle bars, or the like) operably coupled to wheels 14A, 14B of the lawn care vehicle 10 to which steering inputs from the steering assembly 17 are provided in order to allow the operator to steer the lawn care vehicle 10. For example, the operator may sit on the seat 18 to provide operate the lawn care vehicle 10 and provide input for steering of the lawn care vehicle 10 via the steering assembly 17.

In some cases, the steering inputs may be provided to rear wheels 14A of the lawn care vehicle 10 to allow the operator to steer the lawn care vehicle 10. In embodiments in which steering control is provided to the rear wheels 14A, the front wheels 14B may not receive steering inputs. However, in accordance with other example embodiments, steering controls could be initiated by providing steering inputs to the front wheels 14B or to both the front wheels 14B and the rear wheels 14A. Furthermore, in accordance with some example embodiments, some models may be stand-up models that eliminate the seat 18. If the seat 18 is eliminated, the operator may stand at an operator station proximate to the steering assembly 17 to operate the lawn care vehicle 10 and provide input for steering.

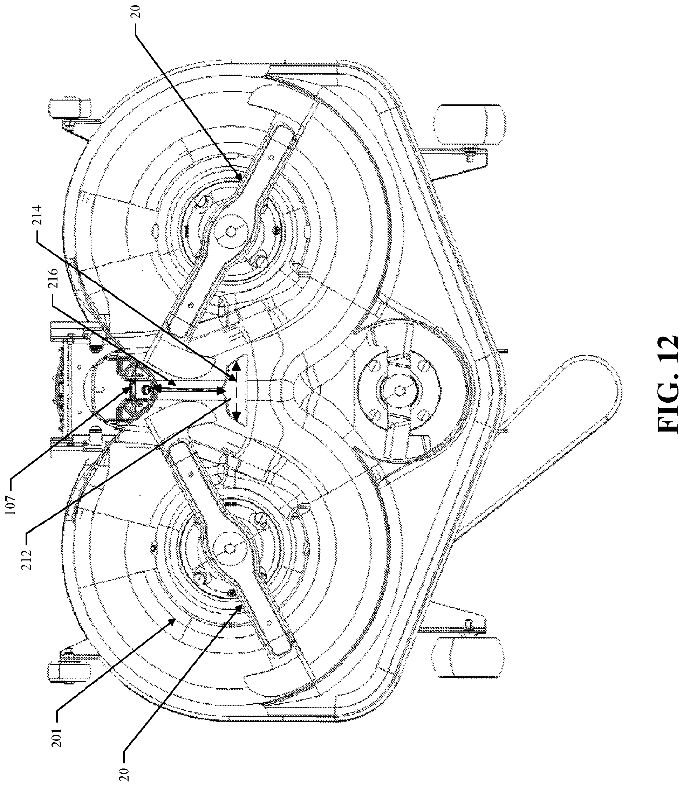

The lawn care vehicle 10 may also include a cutting deck 16 having at least one cutting blade 20 (e.g., three cutting blades) mounted therein (see FIG. 12). The cutting blades 20 may be disposed in an interior of the cutting deck 16. When the cutting blades 20 are rotated below the cutting deck 16 when the cutting deck 16 is in a cutting or operational position, as shown in FIG. 1, the operator may operate the lawn care vehicle 10 to cut grass using the cutting blades 20. In some cases, the cutting deck 16 may be positioned in front of the front wheels 14B. However, in accordance with other example embodiments, the cutting deck 16 may be positioned rearward of a pair of front wheels 14B. Furthermore, in other example embodiments, the cutting deck 16 may be positioned substantially rearward of the pair of front wheels 14B and substantially forward of a pair of rear wheels 14A.

In some example embodiments, the cutting deck 16 of the lawn care vehicle 10 may be pivoted from an operating or mowing position, e.g., cutting blades facing toward the ground (see FIG. 1), to a service position (see FIG. 2) in order to allow the operator to access the cutting blades 20 for repair or service. As shown in FIG. 2, the service position may require pivoting the cutting deck 16 such that cutting blades 20 face at least partially outward from a front of the lawn care vehicle 100. However, in other cases, when the cutting deck 16 is positioned rearward of the pair of front wheels 14B, the cutting deck 16 may have to be removed in order to service. In this case, movement of the cutting deck 16 to the service position may require the operator to remove the cutting deck 16 from the lawn care vehicle 10. In some cases, a release lever 12 may release (or unlock) the cutting deck 16, allowing an operator to move the cutting deck 16 from the operating position to the service position.

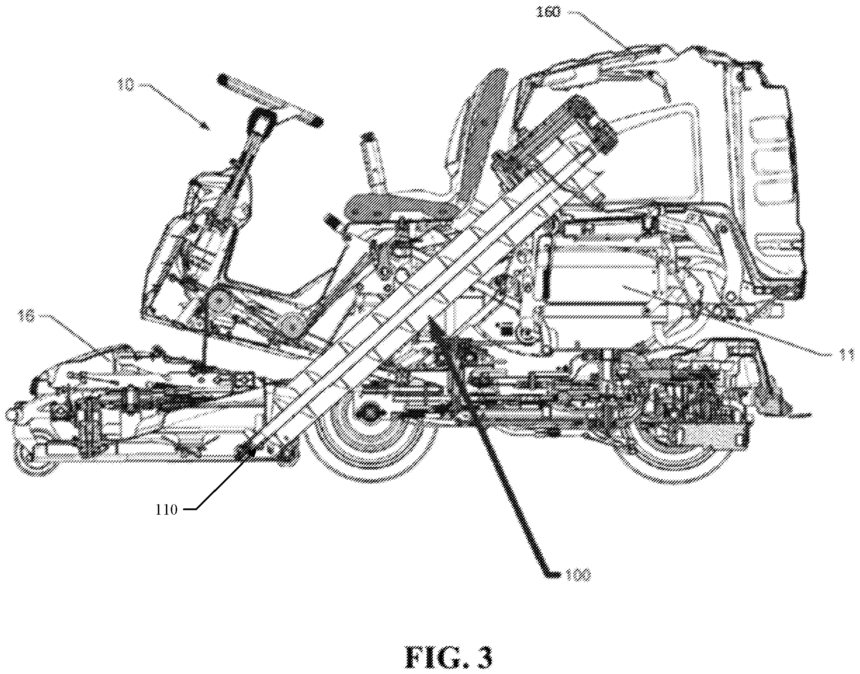

In some cases, the cutting deck 16 may include blade drive components (e.g. belts, pulleys, a blade motor or other components) that may be used to operate the cutting deck 16 during a cutting operation. The blade drive components may be powered by a motor 11 (see FIG. 3) of the lawn care vehicle 10. The motor 11 may be an electric motor (e.g., battery powered) or may be a gasoline engine in some embodiments. In other embodiments, the motor 11 may be a hybrid system involving one or more gasoline engines, electric motors, and batteries. The motor 11 may connect to the cutting blades 20 of the cutting deck 16 via the belt drive components responsive to selective engagement of a clutch assembly (not shown) in some cases.

In an example embodiment, the motor 11, the steering assembly 17, the cutting deck 16, the seat 18, and other components of the lawn care vehicle 10 may be operably coupled to a frame 15 of the lawn care vehicle 10. The frame 15 may be a rigid structure configured to provide support, connectivity, and interoperability functions for various ones of the components of the lawn care vehicle 10. In example embodiments, the frame 15 may be split or articulated such that, for example, the front wheels 14B are disposed on an opposite portion of the frame 15 (e.g., front frame portion) than the portion of the frame 15 on which the back wheels 14A (e.g., rear frame portion) are disposed with respect to an articulated joint in the frame 15. The articulated joint may enable the lawn care vehicle 10 to exhibit a high degree of maneuverability. In some embodiments, the front frame portion of the lawn care vehicle 10 is operably coupled to the rear frame portion of the lawn care vehicle via the articulated joint.

The lawn care vehicle 10 may also include a yard waste collection assembly 160 that is configured to collect lawn clippings or other discharge or debris that is ejected as the result of operation of the lawn care vehicle 10. For example, when the cutting blades 20 cut grass, clippings of the grass may be transported to the yard waste collection assembly 160, as discussed in more detail below. The yard waste collection assembly 160 may be formed of a rigid or soft material and may be removed or pivoted manually by the operator of the lawn care vehicle 10 in order to dump contents (e.g., grass clippings) collected in the yard waste collection assembly 160. It should be understood that, when the lawn care vehicle 10 is operated to cut grass, the grass clippings may either be captured by the yard waste collection assembly 160, mulched, or expelled from the cutting deck 16 via either a side discharge or a rear discharge.

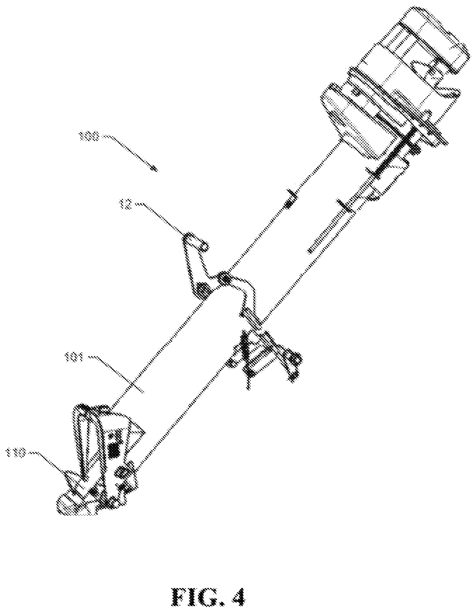

FIGS. 3 and 4 illustrate an example conveyor 100 configured to convey yard waste, such as grass clippings, from a discharge of the cutting deck 16 to the yard waste collection assembly 160. As shown in FIG. 3, a first end of the conveyor 100 may be attached to the cutting deck 16, a second end of the conveyor 100, which is opposite from the first end, may be attached to the yard waste collection assembly 160. In this regard, the conveyor 100 extends from the cutting deck 16 to the yard waste collection assembly 160.

The conveyor 100 may include an auger 110 or a belt conveyor assembly to transport yard waste (e.g., grass clippings) from the cutting deck 16 to the yard waste collection assembly 160. The conveyor 100 may employ a chute 101 that is operably coupled to a portion of the cutting deck 16 proximate to one end of the chute 101 and a portion of the yard waste collection assembly 160 at an opposite end of the chute 101. The location of the opening through which grass clippings enter the chute 101 (i.e., the receiving end or pickup point) relative to the housing of the cutting deck 16 may be different in respective different embodiments. For example, the pickup point could be in the front, back, middle, or side of the cutting deck 16. Similarly, a discharge end of the chute 101 into the yard waste collection assembly 160 could be provided at different locations within or relative to the yard waste collection assembly 160.

In an example embodiment, the chute 101 may extend substantially along a straight line from the receiving end to the discharge end to allow a single auger 110 (e.g., an auger 110 that is undivided, continuous, or integral along its entire longitudinal length) to extend along a longitudinal axis of the chute 101. The auger 110 may include a rotatable rod that may be rotated via power provided by the motor 11 and may include a helical blade extending radially outward from the rod to carry material in a general direction that is parallel to the longitudinal axis of the auger 110 as the material is carried up the rotating helical blade. The auger 110 within the conveyor 100 could be actively or passively fed with clippings in various different embodiments.

To collect yard waste (e.g., grass clippings), forced air produced by the cutting blades 20 may blow the yard waste into an intake 107 of the auger 110, and the auger 110 may enable the yard waste to move through the chute 101 and into the yard waste collection assembly 160. In some example embodiments, a fan (not shown) may be positioned between the cutting deck 16 and yard waste collection assembly 160 to add additional airflow to assist the auger in moving the yard waste through the chute 101. In some conditions (e.g., wet, damp, or sticky environments or tall or tough vegetation or grass), the yard waste or grass clippings may stick to the intake 107 or walls of the auger 110 or chute 101 and in the cutting blades 20 therefore causing a clog. Traditionally, in order to remove the clog, the operator would have to interrupt the mowing process. In this respect, the operator would have to remove the conveyor 100 (or components thereof) or the yard waste collection assembly 160 or move the cutting deck 16 to the service position (based on the location of the clog) in order to remove the clog.

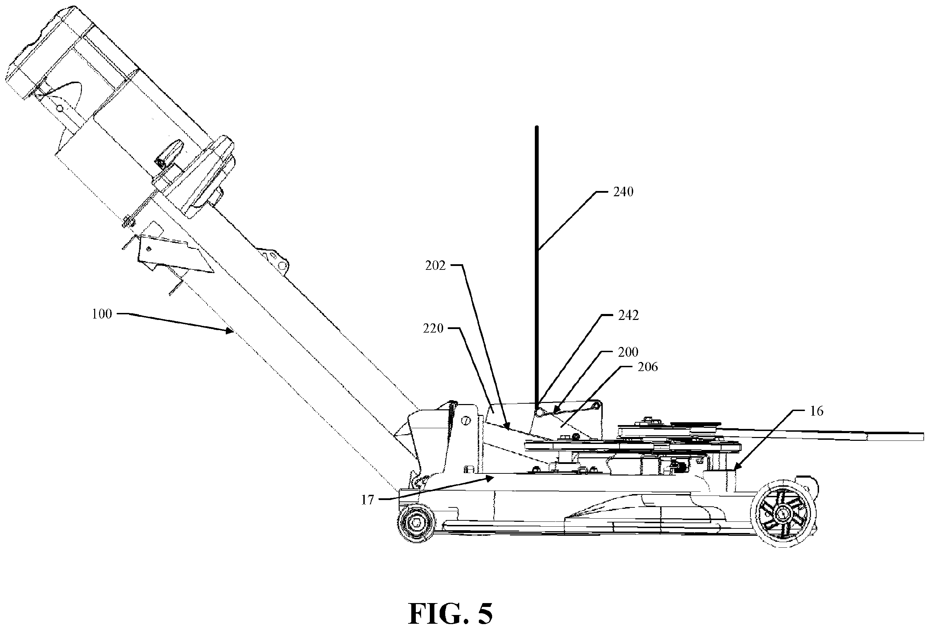

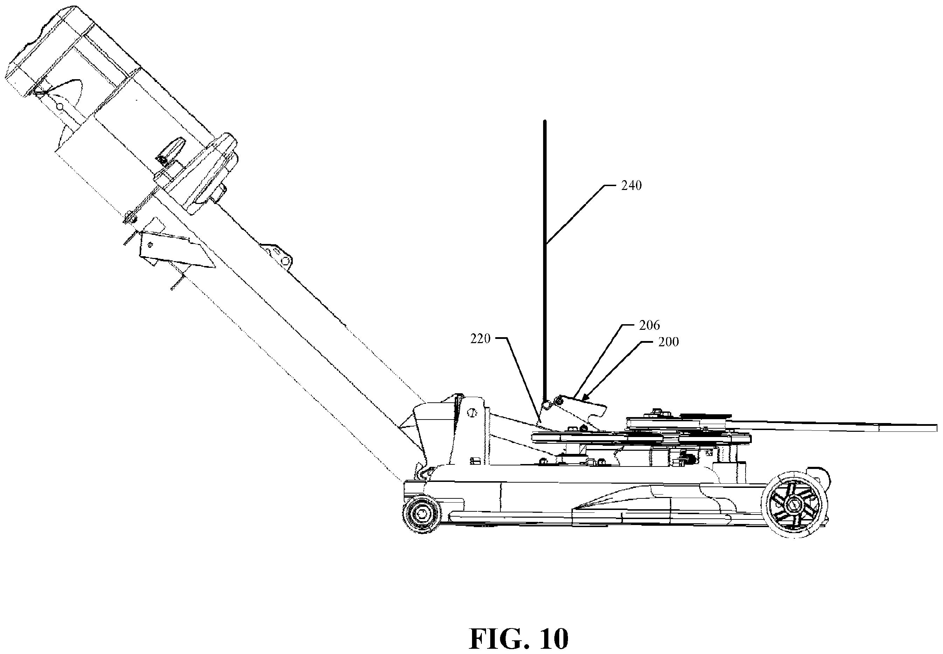

In order to allow an operator to dislodge a clog from the cutting blades 20 or the auger 110 without stopping or interrupting operation of the lawn care vehicle 10, the lawn care vehicle 10 may include a clog cleaning assembly 200. FIGS. 5-12 illustrate example embodiments of the cutting deck 16 having a housing 17 and a clog cleaning assembly 200 operably coupled thereto. The housing 17 of the cutting deck 16 may have an inside or interior portion 201, in which the cutting blade 20 is housed, and an outside or exterior portion 202 opposite from the interior portion. The clog cleaning assembly 200 may be operably coupled to an outside or exterior 202 of the housing 17 and configured to pivot into an interior 201 of the housing 17 to dislodge the clog. In some embodiments, the cutting deck 16 may include a cover (see e.g., FIG. 1) disposed over the housing 17 to hide the exposed components such as belts, clog cleaning assembly 200.

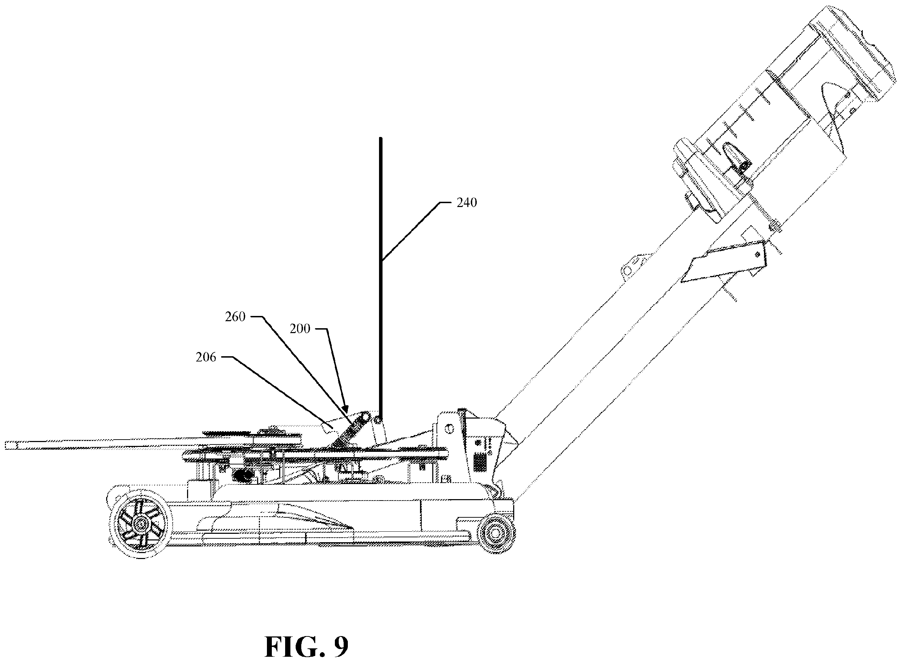

The clog cleaning assembly 200 may be configured to move or pivot from a neutral position (see FIGS. 5, 6, and 8) to an activated position (see FIGS. 9-11) in order to clean or dislodge the clog. In this respect, an operator of the lawn care vehicle 10 may be configured to activate the clog cleaning assembly 200 from the position in which the operator is operating the lawn care vehicle 10 (e.g., seat 18) in order to remove a clog in the cutting blades 20 or auger 110. When the clog cleaning assembly 200 is activated by the operator, the clog cleaning assembly 200 pivots from the neutral position into the interior 201 of the housing 17 to the activated position. It should be understood that the clog cleaning assembly 200 may be activated while the lawn care vehicle 10 is in operation as the clog cleaning assembly 200 is configured to clean or dislodge the clog without disconnecting the cutting deck 16, the conveyor 100 (or its components), or emptying or removing the yard waste collection assembly 160.

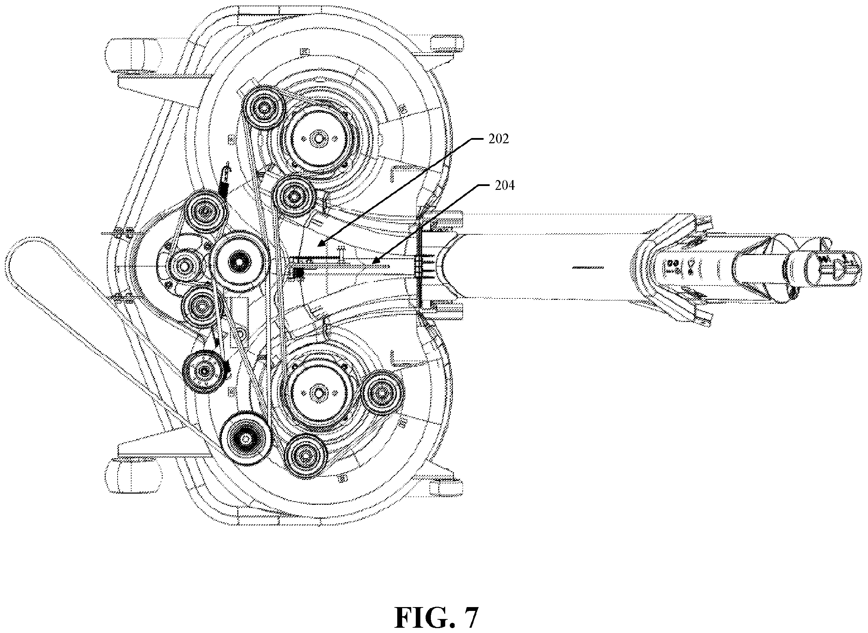

As shown in FIG. 7, the exterior 202 of the housing 206 may have slot or opening 204 through which at least a portion of clog cleaning assembly 200 is configured to pivot in response to activation of the clog cleaning assembly 200 via the operator of the lawn care vehicle 10. As shown in FIG. 7, the slot or opening 204 may be located proximate a center of a width of the cutting deck 16. In this regard, a position of the slot 204 allows the clog cleaning assembly 200 to rotate between two cutting blades or proximate the intake 107 of the auger 110 to dislodge clogs (see FIG. 12). However, in other example embodiments, the slot or opening 204 may be located proximate a position that efficiently allows the clog cleaning assembly 200 to clean or dislodge the clog from the cutting blade 20 or the auger 110. In this regard, the slot 204 may be located proximate the position in which the clog is to be removed from. Furthermore, the slot or opening 204 may be sized such that at least a portion of the clog cleaning assembly 200 may pass through into the interior 201 of the housing 17 to clean or dislodge the clog in response to activation by the operator. In this respect, the slot or opening 204 may be sized to allow the cleaning member 206 to pass through while preventing any yard waste from fitting through the opening 204 to the exterior 202 of the housing 206.

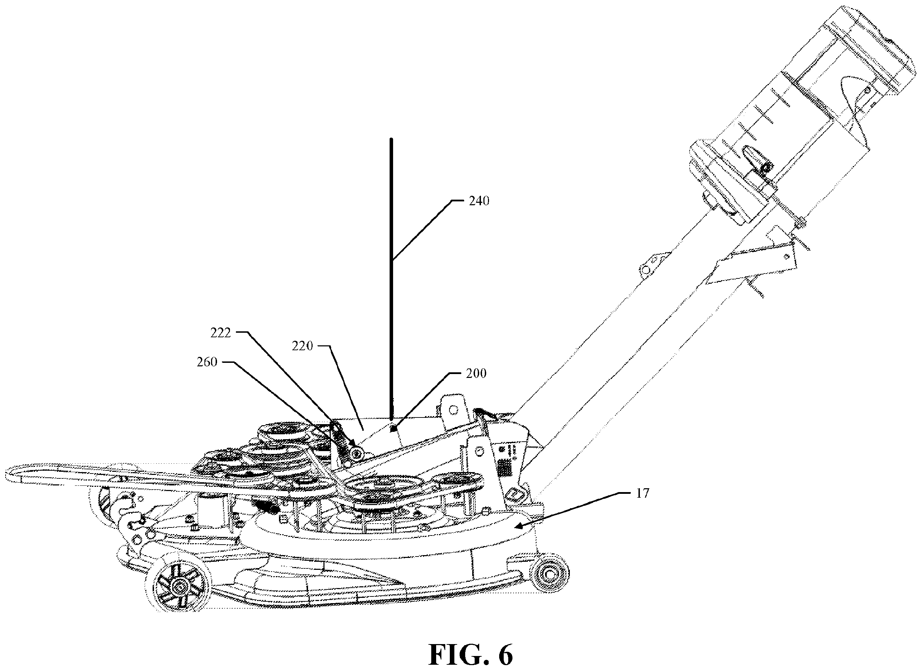

As shown in FIGS. 5, 6, and 8-11, the clog cleaning assembly 200 may include a cleaning member 206 operably coupled to the exterior surface 202 of the cutting deck 16. The cleaning member 206 may be configured to remove the clog from the cutting blades 20 or the auger 110. When the clog cleaning assembly 200 is in the neutral position (see FIGS. 5 and 6), a portion of the cleaning member 206 may be disposed over the opening 204, and the cleaning member 206 may be located away from the cutting blades 20 or the auger 110. When the clog cleaning assembly 200 is activated (see FIGS. 9-11), the cleaning member 206 rotates or pivots through the opening 204 toward a position proximate the cutting blade 20 or auger 110. As the cleaning member 206 rotates, the cleaning member 206 is configured to remove the clog from the cutting blades 20 or the auger 110.

In this regard, the size and position of the cleaning member 206 allows the clog to be dislodged from its position and the cleaning member 206 rotates into the interior 201 of the housing 17.

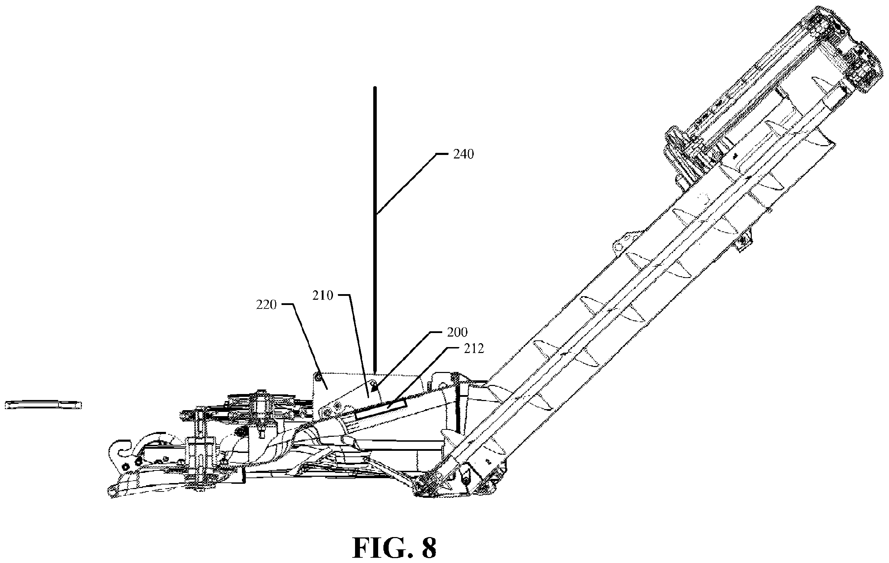

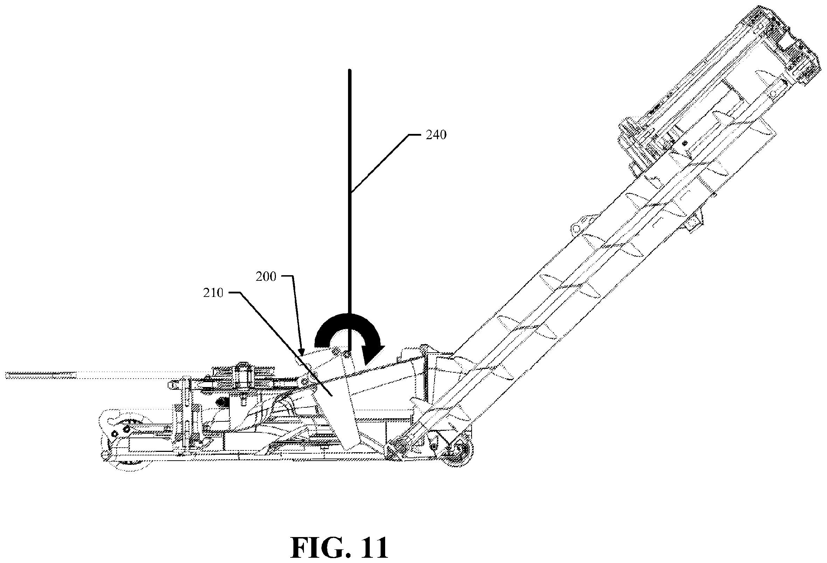

As shown in FIGS. 8, 11, and 12, the cleaning member 206 may include a first portion 210 and a second portion 212. The first portion 210 may be operably coupled to the exterior surface 202 of the cutting deck 16 and be configured to pivot through the opening 204 in the cutting deck 16 when the clog cleaning assembly 200 rotates from the neutral position to the activated position. In this respect, the first portion 210 may be sized such that the first portion 210 may pivot through the opening 204 in response to being activated by the operator. The second portion 212 of the cleaning member 206 may be disposed in the interior of the cutting deck 16 and sized such that the second portion 212 may not pivot through the opening 204. In this respect, when the clog cleaning assembly 200 is in the neutral position, the second portion 212 of the cleaning member 206 may be flush to or in contact with the interior surface 214 of the housing 17. When the clog cleaning assembly 200 is activated and the first portion 210 pivots into the interior 201 of the cutting deck 16, the second portion 212 moves further into the interior 201 of the cutting deck 16 to clean or dislodge the clog (see FIG. 11) as the second portion 212 rotates and pushes the clog from its clogged position.

As is shown in FIG. 12, the second portion 212 of the cleaning member 206 may be operably coupled to or integral with an end of the first portion 210. Furthermore, a longitudinal axis 214 of the second portion 212 may extend perpendicular to a longitudinal axis 216 of the first portion 210. In this regard, the second portion 212 may extend away from each side of the first portion 210 to create a plow. The second portion 212 therefore may be wider than the first portion 210 and thereby configured to remove the clog. In this respect, the second portion 212 of the cleaning member 206 may be sized such that the second portion 212 may efficiently push and remove the clog. In other words, the second portion 212 may be a plow portion of the cleaning member 206 that is configured to push a clog from a stuck position between the cutting blades or in the intake 107 of the auger 110 and remove any clogs the second portion 212 encounters as the second portion 212 rotates proximate the cutting blades 20 or the auger 110.

Furthermore, as shown in any of FIGS. 5, 6, and 8-11, the cleaning member 206 may be operably coupled to the exterior 202 of the housing 17 via a fastening bracket 220 or the like. In this respect, the fastening bracket 220 may be operably coupled to an exterior 202 of the housing 17 proximate or beside the opening 204 that the cleaning member 206 is disposed in when in the neutral position. The fastening bracket 220 may extend away from the exterior 202 of the housing 17 parallel to the cleaning member 206. Furthermore, the cleaning member 206 may be operably coupled to a side of the fastening bracket 220 via a bolt 222 or the like (see e.g., FIG. 6). The bolt 222 which operably couples the cleaning member 206 to the fastening bracket 220 may form the point from which the cleaning member 206 is configured to pivot when activated. Furthermore, due to the location of the fastening bracket, 220 the cleaning member 206 may extend over and into the opening 204. Thus, when the clog cleaning assembly 200 is activated, the first portion 210 is configured to pivot into and through the opening 204. It should be understood, that in accordance with example embodiments described herein, the first portion 210 of the cleaning member 206 may be pivotably coupled to the fastening bracket 220 via the bolt 222 to enable the second portion 212 of the cleaning member 206 to remove the clog.

As shown in FIG. 11, the cleaning member 206, when activated, may be configured to initially pivot in the direction toward the cutting blades 20. However, in other example embodiments, the cleaning member 206 may be configured to pivot into or toward the intake 107 of the auger 110. In some cases, the cleaning member 206 may be configured to pivot in both directions. Furthermore, the position in which the cleaning member 206 is pivotably coupled to the fastening bracket 220 may dictate the initial rotation of the cleaning member 206 when activated. In this respect, if the cleaning member 206 and the fastening bracket 220 were coupled at first end of the cleaning member 206 proximate the conveyor 100, the cleaning member 206 may initially rotate toward the intake 107 of the auger 110 in response to being activated. In other cases, where the cleaning member 206 and fastening bracket 220 are coupled at a second end (see FIG. 6), the cleaning member 206 may initially rotate toward the cutting blades 20 in response to being activated. It should be understood that in accordance with other example embodiments the fastening bracket 200 and the cleaning member 206 may be pivotably coupled in manner such that the operator may decide a direction of initial rotation (i.e., clockwise or counterclockwise, toward the cutting blade, or toward the auger).

As mentioned above, the operator may activate the clog cleaning assembly 200 from the position in which the operator is operating the lawn care vehicle 10. In order to enable the operator to activate the clog cleaning assembly 200, the clog cleaning assembly 200 may include an activation assembly 240. The operator may activate the clog cleaning assembly 200 in order to clean out or dislodge the clog, as necessary, without having to exit the lawn care vehicle 10, move the cutting deck 16 to the service position, or remove any components of the lawn care vehicle 10. The activation of the clog cleaning assembly 200, via the activation assembly 240, may cause the clog cleaning assembly 200 to pivot into the cutting deck 16, as described above. In some cases, the activation assembly 240 may be a wire, rod, linkage, or the like that the operator may pull to activate the clog cleaning assembly 200. As shown in FIG. 5, for example, when the activation assembly 240 is a pull wire or the like, the activation assembly 240 may have a first end disposed proximate where the driver is intended to be seated or positioned (e.g., the seat 18). The activation assembly 240 may also have a second end operably coupled the cleaning member 206.

As shown in FIG. 5, the second end of the activation assembly 240 may be operably coupled to the first end of the cleaning member 206 (end located proximate the conveyor 100). When the activation assembly 240 is operably coupled proximate the first end of the cleaning member 206, the second end of the activation assembly 240, in response to the operator pulling the first end of the activation assembly 240, may exert an upward force (relative to the normal orientation of the lawn care vehicle 10) on the first end of the cleaning member 206 causing the second end of the cleaning member 206 to pivot into the opening 204 toward the cutting blade 20. Of course, if the attachment point of the activation assembly 240 was disposed on the opposite end of the cleaning member 206, the activation of the activation assembly 240 may cause a rotation of the cleaning member 206 into the opening 204 toward the intake 107 of the auger 110. In some cases, the activation assembly 240 may extend from the fastening bracket 220 around a load bolt 242 operably coupled to the cleaning member 206 then up to the position of the driver. The coupling of the activation assembly 240 to fastening bracket 220 and around the load bolt 242 may allow for support and balancing of the activation assembly 240 to thereby enable the operator to more easily activate the clog cleaning assembly 200. It should be understood that in other example embodiments, the activation assembly 240 may be operated by activation of a button, switch, lever, or the like located at or proximate the steering assembly 17.

It should be understood that embodiments herein may include a clog cleaning assembly 200 that includes multiple cleaning members 206 disposed at various positions on the housing 17 of the cutting deck 16. When the clog cleaning assembly 200 includes multiple cleaning members 206, the activation assembly 240 may be configured to activate each of the cleaning members 206 simultaneously. However, in some cases, the activation assembly 240 may controllable to activate only a certain one or ones of the cleaning members 206.

The clog cleaning assembly 200 may also include a biasing mechanism 260 (e.g., a spring) configured to retain the cleaning member 206 in the neutral position (see FIG. 6). In this respect, the biasing mechanism 260 may be operably coupled to the cleaning member 206 (e.g., a first portion 210 of the cleaning member) at a first end and to the fastening bracket 220 at a second end. When the activation assembly 240 is activated by the operator, the activation assembly 240 may be configured to overcome the bias or spring force of the biasing mechanism 260 such that the cleaning member 206 may be tilted or pivoted into the activated position in order to clean or dislodge the clog. When the activation assembly 240 is released or disengaged by the operator, the biasing mechanism 260 may be configured to return the cleaning member 260 back to the neutral position.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims.

## Claims

1. A lawn care vehicle (10) comprising:
a frame (15) to which at least a first drive wheel (14A, 14B) and a second drive wheel (14A, 14B) of the lawn care vehicle (10) are operably coupled;
a cutting deck (16) operably coupled to the frame (15) and comprising a cutting blade (20);
a conveyor (100) operably coupled to the cutting deck (16) and configured to convey yard clippings from the cutting deck (16) to a yard waste collection assembly (160), the conveyor (100) comprising an auger (110); **characterized in that** the lawn care vehicle further comprises:
a clog cleaning assembly (200) operably coupled to an outside (202) of a housing (17) of the cutting deck (16) and configured to pivot from a neutral position through an opening (204) in the housing (17) of the cutting deck (16) to an activated position to dislodge a clog disposed proximate or at the cutting blade (20) or the auger (110), wherein the clog cleaning assembly (200) comprises a cleaning member (206), wherein the cleaning member (206) comprises a first portion (210) and a second portion (212), wherein the first portion (210) is operably coupled to the outside (202) of the housing (17) of the cutting deck (16), and the second portion (212) is configured to dislodge the clog disposed proximate or at the cutting blade (20) or the auger (110).

2. The lawn care vehicle (10) of claim 1, wherein the clog cleaning assembly (200) comprises an activation assembly (240), the activation assembly (240) configured to cause the clog cleaning assembly (200) to pivot from the neutral position to the activated position in response to activation by an operator of the lawn care vehicle (10) located at a position from which the lawn care vehicle (10) is operated.

3. The lawn care vehicle (10) of claim 1, wherein the activation assembly (240) is a wire or linkage, the wire or linkage having a first end operably coupled to the first portion (210) of the cleaning member (206) and a second end disposed proximate the position from which the operator operates the lawn care vehicle (10).

4. The lawn care vehicle (10) of claim 1, wherein the second portion (212) of the cleaning member (206) is integral to or operably coupled to the first portion (210) of the cleaning member (206), and wherein a longitudinal axis (216) of the first portion (210) of the cleaning member (206) is perpendicular to a longitudinal axis (214) of the second portion (212).

5. The lawn care vehicle (10) of claim 4, wherein when the clog cleaning assembly (200) is in the neutral position, the first portion (210) of the cleaning member (206) is disposed on the outside (202) of the housing (17) of the cutting deck (16), and wherein the second portion (212) of the cleaning member (206) is disposed in an interior (201) of the housing (17) of the cutting deck (16) proximate to or flush with the housing (17) of the cutting deck (16), and wherein when the clog cleaning assembly (200) pivots to the activated position, the first portion (210) of the cleaning member (206) pivots through the opening (204) of the housing (17) moving the second portion (212) of the cleaning member (206) proximate to the auger (110) or the cutting blade (20) to dislodge the clog.

6. The lawn care vehicle (10) of claim 2, wherein the clog cleaning assembly (200) comprises a biasing mechanism (260), the biasing mechanism (260) being configured to maintain the clog cleaning assembly (200) in the neutral position, and wherein the activation assembly (240) is configured to overcome a force of the biasing mechanism (260) to move the clog cleaning assembly (200) from the neutral position to the activated position.

7. The lawn care vehicle (10) of claim 6, wherein the biasing mechanism (260) is configured to return the clog cleaning assembly (200) to the neutral position from the activated position in response to the operator releasing or disengaging the activation assembly (240).

8. The lawn care vehicle (10) of claim 1, wherein the clog cleaning assembly (200) is configured to pivot in a direction towards the cutting blade (20) to dislodge the clog from the cutting blade (20).

9. The lawn care vehicle of claim 1, wherein the clog cleaning assembly (200) is configured to pivot in a direction towards an intake (107) of the auger (110) to dislodge the clog from the auger (110).

10. The lawn care vehicle (10) of claim 2, wherein in response to a release of the activation assembly (240) by the operator, the cleaning member (206) is configured to pivot back to the neutral position from the activated position.

## Patentansprüche

1. Ein Rasenpflegefahrzeug (10), das Folgendes umfasst:
einen Rahmen (15), an den mindestens ein erstes Antriebsrad (14A, 14B) und ein zweites Antriebsrad (14A, 14B) des Rasenpflegefahrzeugs (10) funktionsfähig gekoppelt sind;
ein Mähdeck (16), das funktionsfähig mit dem Rahmen (15) verbunden ist und eine Schneidklinge (20) umfasst;
einen Förderer (100), der funktionsfähig mit dem Mähdeck (16) gekoppelt und so konfiguriert ist, dass er Gartenabfälle von dem Mähdeck (16) zu einer Gartenabfallsammelanordnung (160) befördert, wobei der Förderer (100) eine Schnecke (110) umfasst; **dadurch gekennzeichnet, dass** das Rasenpflegefahrzeug ferner umfasst:
eine Verstopfungsreinigungsbaugruppe (200), die betriebsmäßig mit einer Außenseite (202) eines Gehäuses (17) des Mähdecks (16) gekoppelt und so konfiguriert ist, dass sie aus einer neutralen Position durch eine Öffnung (204) im Gehäuse (17) des Mähdecks (16) in eine aktivierte Position schwenkt, um eine Verstopfung, die in der Nähe oder an der Schneidklinge (20) oder der Schnecke (110) angeordnet ist, zu beseitigen, wobei die Verstopfungsreinigungsbaugruppe (200) ein Reinigungselement (206) umfasst, wobei das Reinigungselement (206) einen ersten Abschnitt (210) und einen zweiten Abschnitt (212) umfasst, wobei der erste Abschnitt (210) funktionsfähig mit der Außenseite (202) des Gehäuses (17) des Mähdecks (16) gekoppelt ist und der zweite Abschnitt (212) so konfiguriert ist, dass er die Verstopfung, die sich in der Nähe von oder an der Schneidklinge (20) oder der Schnecke (110) befindet, beseitigt.

2. Rasenpflegefahrzeug (10) nach Anspruch 1, wobei die Verstopfungsreinigungsbaugruppe (200) eine Aktivierungsanordnung (240) umfasst, wobei die Aktivierungsanordnung (240) so konfiguriert ist, dass sie bewirkt, dass die Verstopfungsreinigungsbaugruppe (200) als Reaktion auf die Aktivierung durch einen Bediener des Rasenpflegefahrzeugs (10), der sich an einer Position befindet, von der aus das Rasenpflegefahrzeug (10) betrieben wird, aus der neutralen Position in die aktivierte Position schwenkt.

3. Rasenpflegefahrzeug (10) nach Anspruch 1, wobei die Aktivierungsanordnung (240) ein Draht oder ein Gestänge ist, wobei der Draht oder das Gestänge ein erstes Ende hat, das betriebsmäßig mit dem ersten Abschnitt (210) des Reinigungselements (206) gekoppelt ist, und ein zweites Ende, das in der Nähe der Position angeordnet ist, von der aus der Bediener das Rasenpflegefahrzeug (10) bedient.

4. Rasenpflegefahrzeug (10) nach Anspruch 1, wobei der zweite Abschnitt (212) des Reinigungselements (206) einstückig mit dem ersten Abschnitt (210) des Reinigungselements (206) ausgebildet oder funktionsfähig mit diesem verbunden ist, und wobei eine Längsachse (216) des ersten Abschnitts (210) des Reinigungselements (206) senkrecht zu einer Längsachse (214) des zweiten Abschnitts (212) verläuft.

5. Rasenpflegefahrzeug (10) nach Anspruch 4, wobei, wenn sich die Verstopfungsreinigungsanordnung (200) in der neutralen Position befindet, der erste Abschnitt (210) des Reinigungselements (206) an der Außenseite (202) des Gehäuses (17) des Mähdecks (16) angeordnet ist, und wobei der zweite Abschnitt (212) des Reinigungselements (206) in einem Innenraum (201) des Gehäuses (17) des Mähdecks (16) in der Nähe des Gehäuses (17) des Mähdecks (16) oder bündig mit diesem angeordnet ist, und wobei, wenn die Verstopfungsreinigungsanordnung (200) in die aktivierte Position schwenkt, der erste Abschnitt (210) des Reinigungselements (206) durch die Öffnung (204) des Gehäuses (17) schwenkt und den zweiten Abschnitt (212) des Reinigungselements (206) in die Nähe der Schnecke (110) oder des Schneidmessers (20) bewegt, um die Verstopfung zu entfernen.

6. Rasenpflegefahrzeug (10) nach Anspruch 2, wobei die Verstopfungsreinigungsbaugruppe (200) einen Vorspannmechanismus (260) umfasst, wobei der Vorspannmechanismus (260) so konfiguriert ist, dass er die Verstopfungsreinigungsbaugruppe (200) in der neutralen Position hält, und wobei die Aktivierungsanordnung (240) so konfiguriert ist, dass sie eine Kraft des Vorspannmechanismus (260) überwindet, um die Verstopfungsreinigungsbaugruppe (200) aus der neutralen Position in die aktivierte Position zu bewegen.

7. Rasenpflegefahrzeug (10) nach Anspruch 6, wobei der Vorspannmechanismus (260) so konfiguriert ist, dass er die Verstopfungsreinigungsbaugruppe (200) als Reaktion darauf, dass der Bediener die Aktivierungsanordnung (240) loslässt oder außer Eingriff bringt, aus der aktivierten Position in die neutrale Position zurückführt.

8. Rasenpflegefahrzeug (10) nach Anspruch 1, wobei die Verstopfungsreinigungsbaugruppe (200) so konfiguriert ist, dass sie in Richtung der Schneidklinge (20) schwenkt, um die Verstopfung von der Schneidklinge (20) zu entfernen.

9. Rasenpflegefahrzeug nach Anspruch 1, wobei die Verstopfungsreinigungsbaugruppe (200) so konfiguriert ist, dass sie in Richtung eines Einlasses (107) der Schnecke (110) schwenkt, um die Verstopfung aus der Schnecke (110) zu entfernen.

10. Rasenpflegefahrzeug (10) nach Anspruch 2, wobei das Reinigungselement (206) so konfiguriert ist, dass es als Reaktion auf eine Freigabe der Aktivierungsanordnung (240) durch den Bediener aus der aktivierten Position zurück in die neutrale Position schwenkt.

## Revendications

1. Un véhicule d'entretien des pelouses (10) comprenant:
un châssis (15) auquel au moins une première roue motrice (14A, 14B) et une deuxième roue motrice (14A, 14B) du véhicule d'entretien des pelouses (10) sont couplées de manière opérationnelle;
un plateau de coupe (16) couplé de manière opérationnelle au cadre (15) et comprenant une lame de coupe (20);
un convoyeur (100) couplé de manière opérationnelle au plateau de coupe (16) et configuré pour transporter les déchets de jardin du plateau de coupe (16) vers un ensemble de collecte des déchets de jardin (160), le convoyeur (100) comprenant une vis sans fin (110); **caractérisé en ce que** le véhicule d'entretien des pelouses comprend en outre:
un ensemble de nettoyage de sabot (200) couplé de manière opérationnelle à l'extérieur (202) d'un boîtier (17) du plateau de coupe (16) et configuré pour pivoter d'une position neutre à travers une ouverture (204) dans le boîtier (17) du plateau de coupe (16) à une position activée pour déloger un sabot disposé à proximité ou au niveau de la lame de coupe (20) ou de la vis sans fin (110), dans lequel l'ensemble de nettoyage de sabot (200) comprend un élément de nettoyage (206), dans lequel l'ensemble de nettoyage (200) comprend un élément de nettoyage (206), dans lequel l'élément de nettoyage (206) comprend une première partie (210) et une seconde partie (212), dans lequel la première partie (210) est couplée de manière opérationnelle à l'extérieur (202) du boîtier (17) du plateau de coupe (16), et la seconde partie (212) est configurée pour déloger le sabot situé à proximité ou au niveau de la lame de coupe (20) ou de la vis sans fin (110).

2. Le véhicule d'entretien de pelouse (10) de la revendication 1, dans lequel l'ensemble de nettoyage de sabot (200) comprend un ensemble d'activation (240), l'ensemble d'activation (240) configuré pour faire pivoter l'ensemble de nettoyage de sabot (200) de la position neutre à la position activée en réponse à l'activation par un opérateur du véhicule d'entretien de pelouse (10) situé à une position à partir de laquelle le véhicule d'entretien de pelouse (10) est actionné.

3. Le véhicule d'entretien des pelouses (10) de la revendication 1, dans lequel l'ensemble d'activation (240) est un fil ou un lien, le fil ou le lien ayant une première extrémité couplée de manière opérationnelle à la première partie (210) de l'élément de nettoyage (206) et une deuxième extrémité disposée à proximité de la position à partir de laquelle l'opérateur fait fonctionner le véhicule d'entretien des pelouses (10).

4. Le véhicule d'entretien des pelouses (10) de la revendication 1, dans lequel la deuxième partie (212) de l'élément de nettoyage (206) est intégrée ou couplée de manière opérationnelle à la première partie (210) de l'élément de nettoyage (206), et dans lequel un axe longitudinal (216) de la première partie (210) de l'élément de nettoyage (206) est perpendiculaire à un axe longitudinal (214) de la deuxième partie (212).

5. Le véhicule d'entretien de pelouse (10) de la revendication 4, dans lequel lorsque l'ensemble de nettoyage de sabot (200) est en position neutre, la première partie (210) de l'élément de nettoyage (206) est disposée sur l'extérieur (202) du boîtier (17) du plateau de coupe (16), et dans lequel la deuxième partie (212) de l'élément de nettoyage (206) est disposée à l'intérieur (201) du boîtier (17) du plateau de coupe (16) à proximité ou au ras du boîtier (17) du plateau de coupe (16), et dans lequel, lorsque l'ensemble de nettoyage de sabot (200) pivote en position activée, la première partie (210) de l'élément de nettoyage (206) pivote à travers l'ouverture (204) du boîtier (17), déplaçant la deuxième partie (212) de l'élément de nettoyage (206) à proximité de la vis sans fin (110) ou de la lame de coupe (20) afin de déloger le sabot.

6. Le véhicule d'entretien de pelouse (10) de la revendication 2, dans lequel l'ensemble de nettoyage de sabot (200) comprend un mécanisme de sollicitation (260), le mécanisme de sollicitation (260) étant configuré pour maintenir l'ensemble de nettoyage de sabot (200) en position neutre, et dans lequel l'ensemble d'activation (240) est configuré pour surmonter une force du mécanisme de sollicitation (260) afin de déplacer l'ensemble de nettoyage de sabot (200) de la position neutre à la position activée.

7. Le véhicule d'entretien des pelouses (10) de la revendication 6, dans lequel le mécanisme de sollicitation (260) est configuré pour ramener l'ensemble de nettoyage des sabots (200) de la position activée à la position neutre en réponse à la libération ou au désengagement par l'opérateur de l'ensemble d'activation (240).

8. Le véhicule d'entretien des pelouses (10) de la revendication 1, dans lequel l'ensemble de nettoyage du sabot (200) est configuré pour pivoter dans une direction vers la lame de coupe (20) pour déloger le sabot de la lame de coupe (20).

9. Le véhicule d'entretien des pelouses de la revendication 1, dans lequel l'ensemble de nettoyage du sabot (200) est configuré pour pivoter dans une direction vers une entrée (107) de la vis sans fin (110) pour déloger le sabot de la vis sans fin (110).

10. Le véhicule d'entretien des pelouses (10) de la revendication 2, dans lequel, en réponse à la libération de l'ensemble d'activation (240) par l'opérateur, l'élément de nettoyage (206) est configuré pour pivoter de nouveau vers la position neutre à partir de la position activée.
